# EUROPEAN PATENT SPECIFICATION

(11) **EP 4 281 294 B1**
(45) Date of publication and mention of the grant of the patent: **29.04.2026**
(21) Application number: 22701384.4
(22) Date of filing: 24.01.2022
(51) Int. Cl.: B60B 33/00, B60B 33/04

(54) **WHEEL MECHANISM**
RADMECHANISMUS
MÉCANISME DE ROUE

(30) Priority: 25.01.2021 CN 202110099978
(43) Date of publication of application: 29.11.2023
(73) Proprietor: Wonderland Switzerland AG, 6312 Steinhausen (CH)
(72) Inventor: WANG, Er-xue, Dongguan, Guangdong 523648 (CN); GUO, Zhengwen, Dongguan, Guangdong 523648 (CN); DUAN, Xiaosong, Dongguan, Guangdong 523648 (CN)
(74) Representative: Lucke, Andreas
(86) International application number: PCT/EP2022/051488
(87) International publication number: WO 2022/157359

(56) References cited:
- EP-A1- 1 425 191
- EP-A1- 1 425 191
- EP-A1- 2 590 531
- EP-A1- 2 590 531
- EP-A1- 2 946 943
- EP-A1- 2 946 943
- EP-A1- 3 750 779
- EP-A1- 3 750 779
- DE-A1- 102011 054 200
- DE-A1- 102011 054 200
- US-A- 3 768 116
- US-A- 3 768 116

## Description

### Field of the Invention

The present invention relates to a wheel mechanism, particularly a wheel mechanism capable of preventing a wheel from shimmying.

### Background of the Invention

A stroller is a tool used by parents to carry babies or children when they go shopping. At present, when the stroller is moving, wheels will move up and down to generate shimmy. At this time, the wheels may not rotate stably due to shimmy. Furthermore, the upper and lower components will collide with each other due to shimmy, thereby generating noise and reducing the comfort of the stroller.

EP 3 750 779 A1 discloses a wheeled carrying apparatus that includes a frame structure including a standing frame, a wheel mount carrying a wheel and pivotally connected with the standing frame, the wheel being rotatable relative to the first wheel mount about a wheel axis, a locking assembly including a wheel mount latch movably connected with the standing frame, the wheel mount latch being engaged with the wheel mount to rotationally lock the first wheel mount with respect to the standing frame, and disengaged from the wheel mount to unlock the wheel mount for rotation of the wheel mount to change an orientation of the wheel axis, an actuating assembly coupled to the wheel mount latch and including one or more linking part, and a release mechanism including an operating part provided on the frame structure that is operable to cause the actuating assembly to pull the wheel mount latch to disengage from the wheel mount.

EP 2 946 943 A1 describes: In a castor for a rollable device, in particular for a piece of luggage, with a castor axle which can be fastened to the rollable device in a rotationally fixed manner at a first end, a castor body which has a receptacle for the second end of the castor axle, wherein the castor body can be pivoted about the castor axle, it is provided that a damping element is arranged between the castor body and the castor axle.

DE 10 2011 054 200 A1 discloses: The steering roller has a roller body and a pin that is fixed at the roller body and has a fastening section, with which the pin is fixed at a suitcase. A cam roller is rotatably fixed at the roller body around a rotational axis. A bearing section is captivated in a bearing opening by a fastening screw that is screwed in a front surface opening of a front surface of the bearing section. A head of the fastening screw is supported at a damping disk that is clamped-down by a shaft of the fastening screw.

US 3,768,116 A discloses: A rubber insulating sleeve is positioned between the caster socket insert and mounting socket walls. The sleeve provides a non-rigid assembly for damping the transmission of acoustical vibrations between the caster and caster supported body. The sleeve has a lower flange with a washer embedded therein which overrides the lower portion of the socket insert to prevent the insert and sleeve from being undesirably drawn up into the socket opening.

EP 1 425 191 A1 discloses a caster apparatus comprising a wheel having an axis of rotation, and a brake system including a brake member coupled to the wheel for rotation about the axis of rotation of the wheel and a cable having a first end portion coupled to the brake member and a second end portion. The apparatus also comprises an actuator coupled to the second end portion of the cable. The actuator is actuatable to move the cable, thereby rotating the brake member about the axis of rotation to brake the wheel.

EP 2 590 531 A1 discloses a swivel caster for suitcases, items of luggage, transport containers or the like has at least one wheel which is rotatably received about an axis of rotation, and a steering axle which is arranged approximately at a right angle to the axis of rotation of the at least one wheel and about which the at least one wheel can be steered. The aim of the disclosure is to reduce the transmission of vibrations, running noises and jolts and bumps onto the suitcase, the item of luggage, the transport container or the like. The swivel caster comprises an elastic damping element which is mounted between the wheel of the swivel caster and a fastening element of the swivel caster on the suitcase side.

### Summary of the Invention

The present invention aims at providing a wheel mechanism capable of preventing a wheel from shimmying, thereby resolving the aforesaid problems.

This is achieved by a wheel mechanism according to claims 1, 4 and 9. The dependent claims pertain to corresponding further developments and improvements.

As will be seen more clearly from the detailed description following below, the claimed wheel mechanism includes a fixing base, a wheel base, a wheel, a fixing tube and an upper gasket. The wheel is pivotally connected to the wheel base. The fixing tube pivotally connects the wheel base to the fixing base. The upper gasket is disposed between the fixing base and the wheel base. The upper gasket has a ring shape and is sleeved on the fixing tube and abuts against an inner surface of the fixing base and a top surface of the wheel base.

Preferably, the wheel mechanism further includes a lower gasket disposed between the wheel base and the fixing tube.

Preferably, the lower gasket is disposed on a lower edge of the fixing tube.

Preferably, the fixing base has a fixing hole, the wheel base has a through hole, and an end of the fixing tube passes through the through hole and is fixed in the fixing hole, such that the fixing tube pivotally connects the wheel base to the fixing base.

As will be seen more clearly from the detailed description following below, the claimed wheel mechanism includes a fixing base, a wheel base, a wheel, a fixing tube and a lower gasket. The wheel is pivotally connected to the wheel base. The fixing tube pivotally connects the wheel base to the fixing base. The lower gasket is disposed between the wheel base and the fixing tube. The lower gasket has a ring shape and is sleeved on a lower edge of the fixing tube and abuts against a bottom surface of the wheel base and the lower edge of the fixing tube.

Preferably, the wheel mechanism further includes an upper gasket disposed between the fixing base and the wheel base.

Preferably, the upper gasket is sleeved on the fixing tube.

Preferably, the fixing base has a fixing hole, the wheel base has a through hole, and an end of the fixing tube passes through the through hole and is fixed in the fixing hole, such that the fixing tube pivotally connects the wheel base to the fixing base.

Preferably, the fixing tube is fixed in the fixing base, the fixing tube has a through hole, the wheel base has a rotating shaft, and the rotating shaft is rotatably disposed in the through hole, such that the fixing tube pivotally connects the wheel base to the fixing base.

Preferably, a top of the rotating shaft abuts against the fixing tube.

Preferably, the wheel base has a directional plate fixed on the rotating shaft and the lower gasket is disposed on the directional plate.

As will be seen more clearly from the detailed description following below, the claimed wheel mechanism includes a fixing base, a wheel base, a wheel, a rotating shaft and a plurality of resilient members. The wheel is pivotally connected to the wheel base. The rotating shaft is disposed on one of the fixing base and the wheel base. The wheel base is pivotally connected to the fixing base by the rotating shaft. The plurality of resilient members is disposed on the wheel base between the fixing base, the wheel base and around the rotating shaft.

Preferably, the plurality of resilient members is ring-shaped and sleeved on the rotating shaft.

Preferably, the plurality of resilient members has at least one protruding portion and the at least one protruding portion abuts against one of the fixing base and the wheel base.

Preferably, the fixing base has a through hole, the plurality of resilient members is disposed in the through hole, the rotating shaft is disposed on the wheel base, and the rotating shaft is rotatably disposed in the through hole, such that the plurality of resilient members is disposed between the fixing base and the rotating shaft.

Preferably, the wheel base has a through hole, the plurality of resilient members is disposed in the through hole, the rotating shaft is disposed on the fixing base, and the rotating shaft is rotatably disposed in the through hole, such that the plurality of resilient members is disposed between the wheel base and the rotating shaft.

### Brief Description of the Drawings

In the following, the invention is further illustrated by way of example, taking reference to the accompanying drawings thereof:
FIG. 1 is a perspective view illustrating a wheel mechanism according to an embodiment of the invention,
FIG. 2 is an exploded view illustrating the wheel mechanism shown in FIG. 1,
FIG. 3 is a sectional view illustrating the wheel mechanism shown in FIG. 1,
FIG. 4 is a sectional view illustrating a wheel mechanism according to another embodiment of the invention,
FIG. 5 is a sectional view illustrating a wheel mechanism according to another embodiment of the invention,
FIG. 6 is a perspective view illustrating a wheel mechanism according to another embodiment of the invention,
FIG. 7 is an exploded view illustrating the wheel mechanism shown in FIG. 6,
FIG. 8 is a perspective view illustrating a rotating shaft shown in FIG. 7,
FIG. 9 is a partial sectional view illustrating the wheel mechanism shown in FIG. 6,
FIG. 10 is a perspective view illustrating a wheel mechanism according to another embodiment of the invention,
FIG. 11 is a perspective view illustrating a wheel base shown in FIG. 10,
FIG. 12 is a sectional view illustrating a wheel mechanism according to background example of the invention,
FIG. 13 is a perspective view illustrating a fixing base shown in FIG. 12,
FIG. 14 is a perspective view illustrating a resilient member shown in FIG. 13,
FIG. 15 is a sectional view illustrating a wheel mechanism according to another background example of the invention, and
FIG. 16 is a sectional view illustrating a wheel mechanism according to another background example of the invention.

### Detailed Description

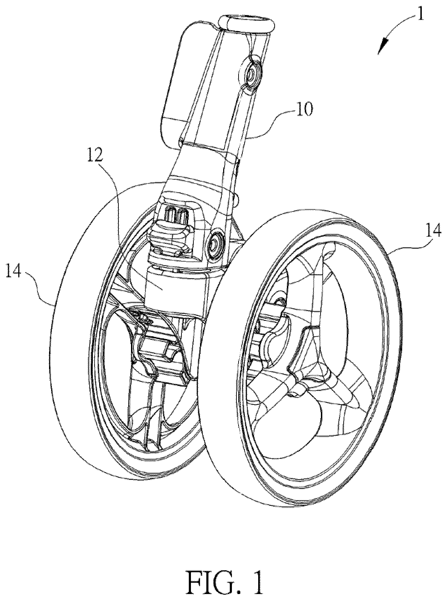

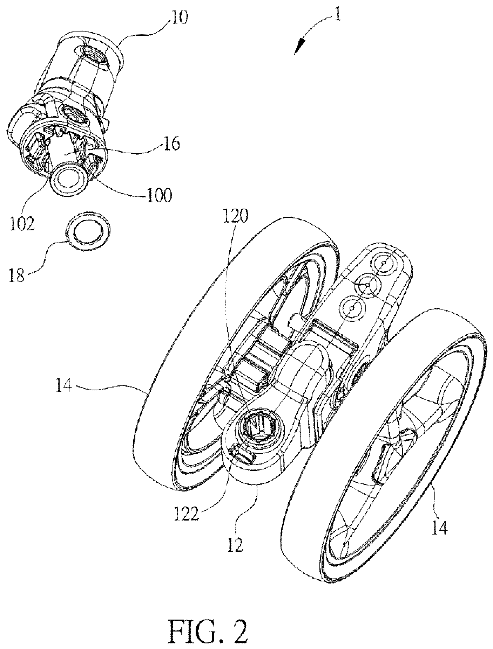

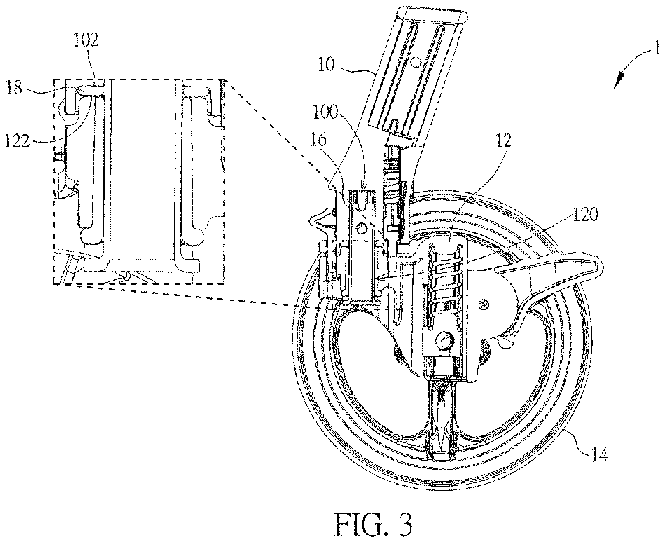

Referring to FIGs. 1 to 3, FIG. 1 is a perspective view illustrating a wheel mechanism 1 according to an embodiment of the invention, FIG. 2 is an exploded view illustrating the wheel mechanism 1 shown in FIG. 1, and FIG. 3 is a sectional view illustrating the wheel mechanism 1 shown in FIG. 1.

As shown in FIGs. 1 to 3, the wheel mechanism 1 of the invention includes a fixing base 10, a wheel base 12, a wheel 14, a fixing tube 16 and an upper gasket 18. The wheel 14 is pivotally connected to the wheel base 12, such that the wheel 14 can rotate. In this embodiment, there are two wheels 14 pivotally connected to opposite sides of the wheel base 12. The fixing tube 16 pivotally connects the wheel base 12 to the fixing base 10. In this embodiment, the fixing base 10 has a fixing hole 100 and the wheel base 12 has a through hole 120. An end of the fixing tube 16 passes through the through hole 120 of the wheel base 12 and is fixed in the fixing hole 100 of the fixing base 10, such that the fixing tube 16 pivotally connects the wheel base 12 to the fixing base 10. Accordingly, the wheel base 12 with the wheel 14 can rotate around the fixing base 10.

As shown in FIG. 3, in this embodiment, the upper gasket 18 is sleeved on the fixing tube 16, wherein the upper gasket 18 may be sleeved on any position between opposite ends of the fixing tube 16, e.g. a middle segment of the fixing tube 16 or a position 1/3 away from either end of the fixing tube 16. Thus, after the wheel mechanism 1 is assembled, the upper gasket 18 is disposed between the fixing base 10 and the wheel base 12. The upper gasket 18 abuts against an inner surface 102 of the fixing base 10 and a top surface 122 of the wheel base 12 to prevent the wheel 14 with the wheel base 12 from moving up and down, so as to prevent the wheel 14 from shimmying. Furthermore, since the upper gasket 18 is disposed between the fixing base 10 and the wheel base 12, it can further prevent the inner surface 102 of the fixing base 10 and the top surface 122 of the wheel base 12 from colliding with each other to generate noise. In this embodiment, the upper gasket 18 may be made of ethylene-vinyl acetate copolymer (EVA), rubber or other resilient materials according to practical applications.

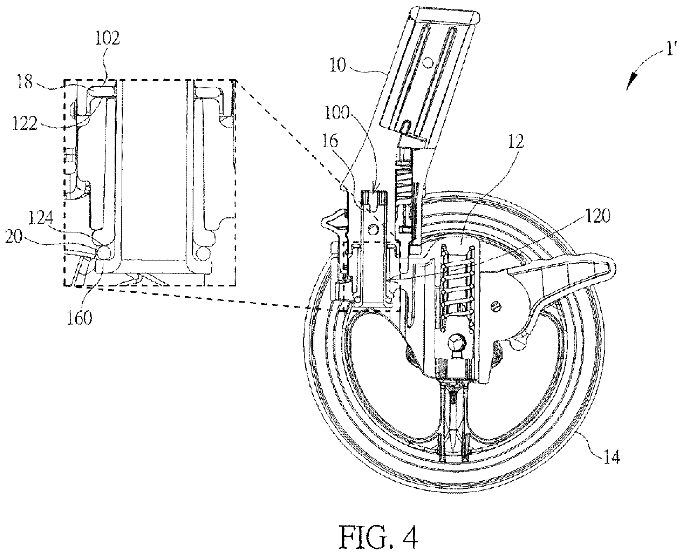

Referring to FIG. 4, FIG. 4 is a sectional view illustrating a wheel mechanism 1' according to another embodiment of the invention. The main difference between the wheel mechanism 1' and the aforesaid wheel mechanism 1 is that the wheel mechanism 1' further includes a lower gasket 20 disposed between the wheel base 12 and the fixing tube 16, as shown in FIG. 4. In this embodiment, the lower gasket 20 is disposed on a lower edge 160 of the fixing tube 16. Thus, after the wheel mechanism 1' is assembled, the lower gasket 20 abuts against a bottom surface 124 of the wheel base 12 and the lower edge 160 of the fixing tube 16 to prevent the wheel 14 with the wheel base 12 from moving up and down, so as to prevent the wheel 14 from shimmying. Furthermore, since the lower gasket 20 is disposed between the wheel base 12 and the fixing tube 16, it can further prevent the bottom surface 124 of the wheel base 12 and the lower edge 160 of the fixing tube 16 from colliding with each other to generate noise. In this embodiment, the lower gasket 20 may be made of ethylene-vinyl acetate copolymer (EVA), rubber or other resilient materials according to practical applications.

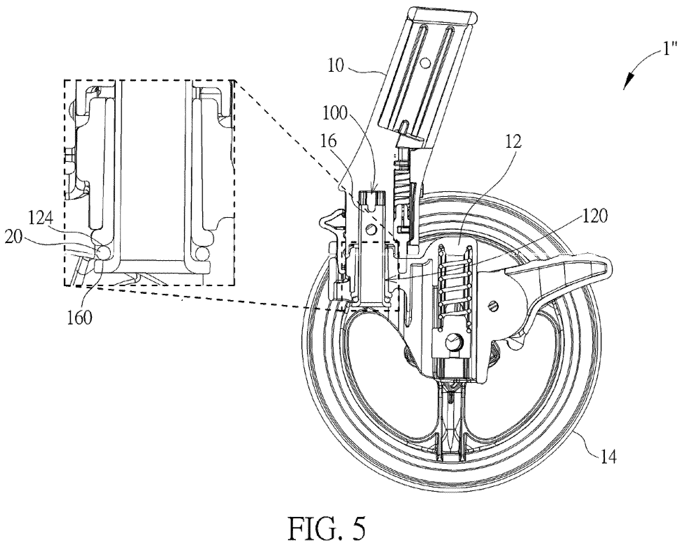

Referring to FIG. 5, FIG. 5 is a sectional view illustrating a wheel mechanism 1" according to another embodiment of the invention. The main difference between the wheel mechanism 1" and the aforesaid wheel mechanism 1' is that the wheel mechanism 1" only includes the lower gasket 20 without the upper gasket 18. In other words, the invention may only dispose the lower gasket 20 between the wheel base 12 and the fixing tube 16 without disposing the upper gasket 18.

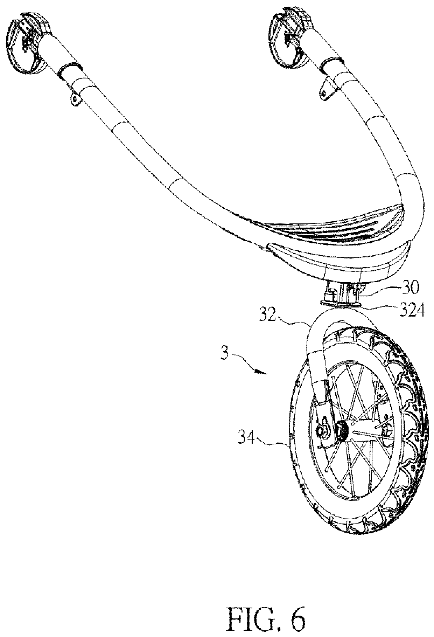

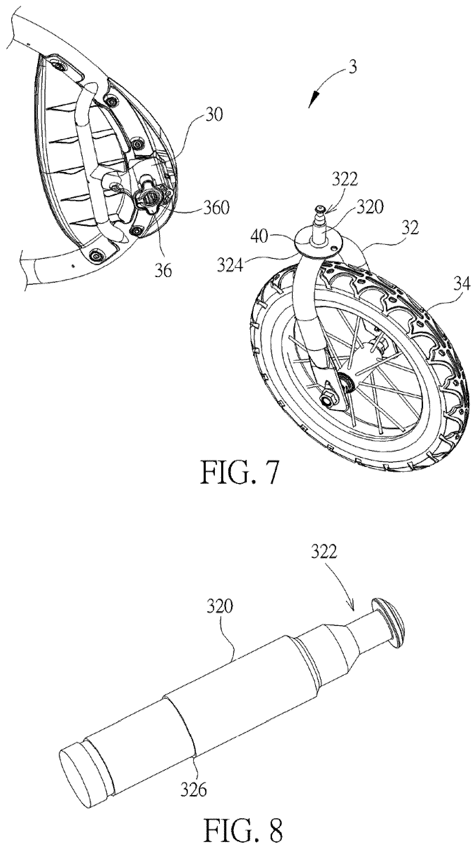

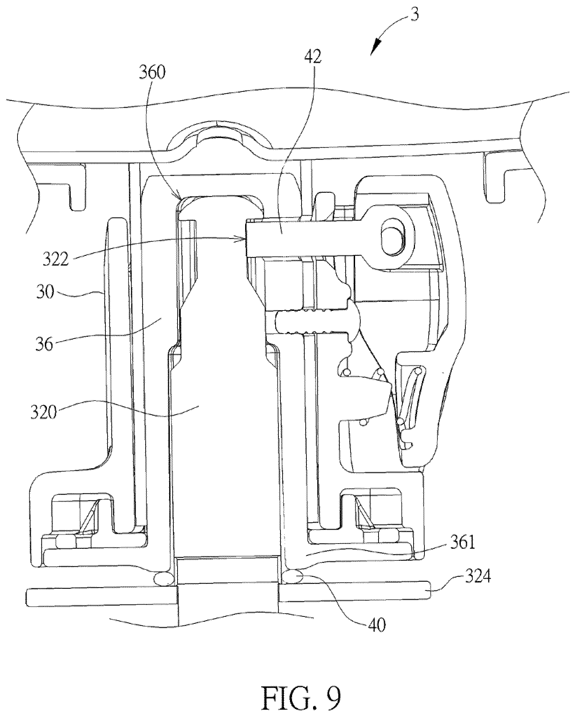

Referring to FIGs. 6 to 9, FIG. 6 is a perspective view illustrating a wheel mechanism 3 according to another embodiment of the invention, FIG. 7 is an exploded view illustrating the wheel mechanism 3 shown in FIG. 6, FIG. 8 is a perspective view illustrating a rotating shaft 320 shown in FIG. 7, and FIG. 9 is a partial sectional view illustrating the wheel mechanism 3 shown in FIG. 6.

As shown in FIGs. 6 to 9, the wheel mechanism 3 of the invention includes a fixing base 30, a wheel base 32, a wheel 34, a fixing tube 36 and a lower gasket 40. The wheel 34 is pivotally connected to the wheel base 32, such that the wheel 34 can rotate. The fixing tube 36 pivotally connects the wheel base 32 to the fixing base 30. In this embodiment, the fixing tube 36 is fixed in the fixing base 30. Furthermore, the fixing tube 36 has a through hole 360 and the wheel base 32 has a rotating shaft 320. The rotating shaft 320 is rotatably disposed in the through hole 360, such that the fixing tube 36 pivotally connects the wheel base 32 to the fixing base 30. As shown in FIG. 9, a restraining pin 42 may be inserted into the fixing base 30 and the fixing tube 36 from a side of the fixing base 30 and abuts against a restraining recess 322 of the rotating shaft 320, such that the rotating shaft 320 is rotatably restrained in the through hole 360 of the fixing tube 36. Accordingly, the wheel base 32 with the wheel 34 can rotate around the fixing base 30.

As shown in FIG. 9, the lower gasket 40 is disposed between the wheel base 32 and the fixing tube 36. As shown in FIGs. 7 and 9, the wheel base 32 may have a directional plate 324 fixed on the rotating shaft 320. As shown in FIG. 8, the rotating shaft 320 may have a step 326. The step 326 is used to be welded and positioned with the directional plate 324, so as to determine the length of the rotating shaft 320 exposed out of the directional plate 324. The lower gasket 40 may be disposed on the directional plate 324. Thus, after the wheel mechanism 3 is assembled, the lower gasket 40 abuts against the directional plate 324 of the wheel base 32 and a lower edge 361 of the fixing tube 36 to prevent the wheel 34 with the wheel base 32 from moving up and down, so as to prevent the wheel 34 from shimmying. Furthermore, since the lower gasket 40 is disposed between the wheel base 32 and the fixing tube 36, it can further prevent the directional plate 324 of the wheel base 32 and the fixing tube 36 from colliding with each other to generate noise. In this embodiment, the lower gasket 40 may be made of ethylene-vinyl acetate copolymer (EVA), rubber or other resilient materials according to practical applications. Preferably, a top of the rotating shaft 320 may abut against the fixing tube 36 to prevent the lower gasket 40 from being crushed. Furthermore, the lower gasket 40 may be interference fit with the rotating shaft 320 to prevent dust from entering. Still further, the lower gasket 40 may also be interference fit with the lower edge 361 of the fixing tube 36. Moreover, lubricant may be added to the periphery of the lower gasket 40, such that noise will not be generated while the lower gasket 40 and the fixing tube 36 are impacted.

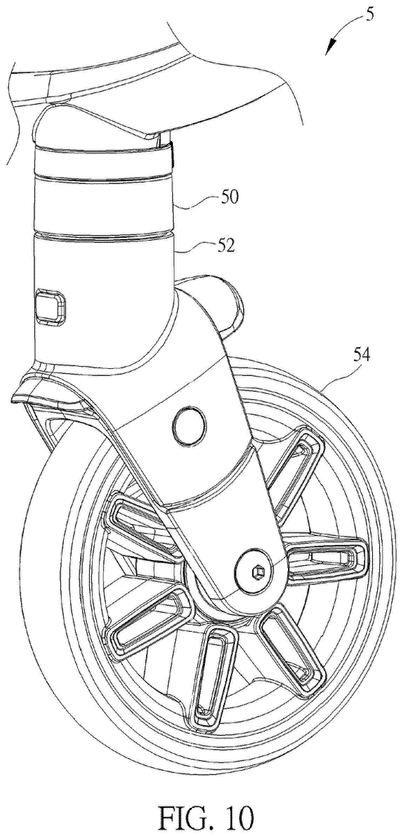

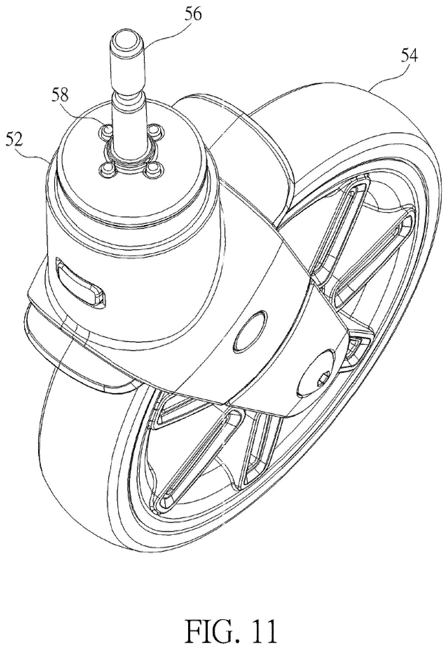

Referring to FIGs. 10 and 11, FIG. 10 is a perspective view illustrating a wheel mechanism 5 according to another embodiment of the invention and FIG. 11 is a perspective view illustrating a wheel base 52 shown in FIG. 10.

As shown in FIGs. 10 and 11, the wheel mechanism 5 includes a fixing base 50, a wheel base 52, a wheel 54, a rotating shaft 56 and a plurality of resilient members 58. The wheel 54 is pivotally connected to the wheel base 52, such that the wheel 54 can rotate. The rotating shaft 56 is disposed on the wheel base 52, such that the wheel base 52 may be pivotally connected to the fixing base 50 by the rotating shaft 56. Accordingly, the wheel base 52 with the wheel 54 can rotate around the fixing base 50. In this embodiment, the wheel mechanism 5 may include four resilient members 58. The four resilient members 58 may be disposed on the wheel base 52 and around the rotating shaft 56. It should be noted that the number and position of the resilient members 58 may be determined according to practical applications, so the invention is not limited to the embodiment shown in the figure. In this embodiment, the resilient member 58 is circular, but the invention is not so limited. In another embodiment, the resilient member 58 may also be rectangular, oval-shaped or other shapes according to practical applications. After the wheel mechanism 5 is assembled, the resilient members 58 are disposed between the fixing base 50 and the wheel base 52 to prevent the wheel 54 with the wheel base 52 from moving up and down, so as to prevent the wheel 54 from shimmying. Furthermore, since the resilient members 58 are disposed between the fixing base 50 and the wheel base 52, it can further prevent the wheel base 52 and the fixing base 50 from colliding with each other to generate noise. In this embodiment, the resilient member 58 may be made of ethylene-vinyl acetate copolymer (EVA), rubber or other resilient materials according to practical applications.

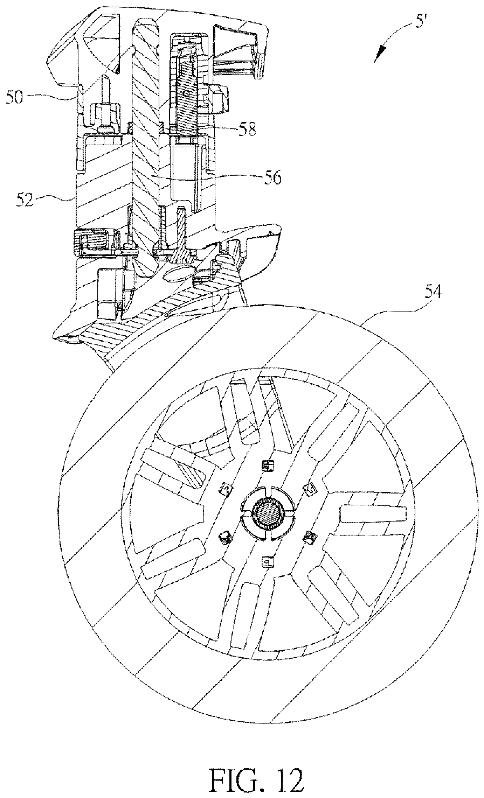

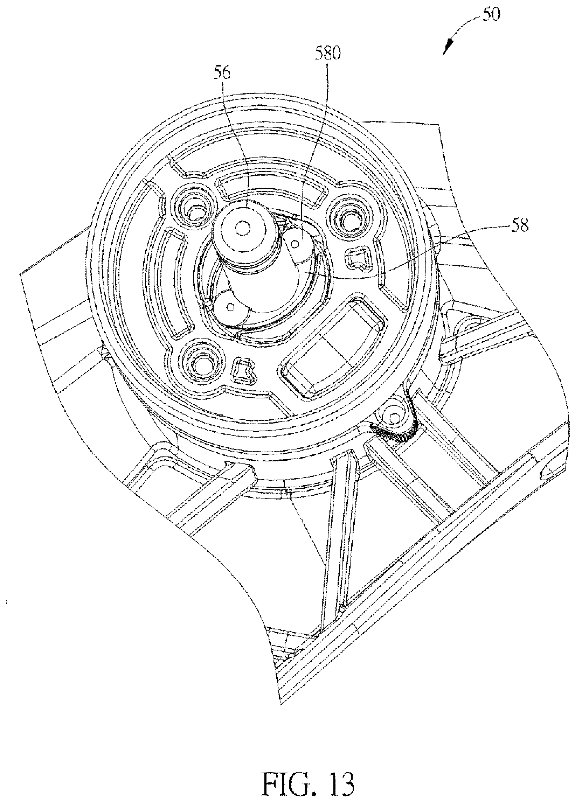

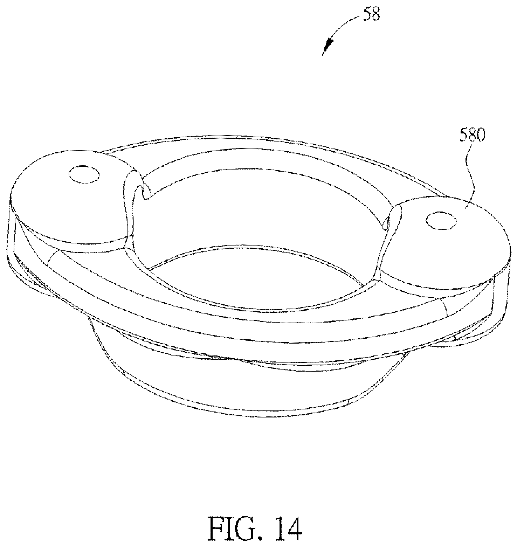

Referring to FIGs. 12 to 14, FIG. 12 is a sectional view illustrating a wheel mechanism 5' according to a background example of the invention that is not covered by the claims, FIG. 13 is a perspective view illustrating a fixing base 50 shown in FIG. 12, and FIG. 14 is a perspective view illustrating a resilient member 58 shown in FIG. 13. The main difference between the wheel mechanism 5' and the aforesaid wheel mechanism 5 is that the rotating shaft 56 of the wheel mechanism 5' is disposed on the fixing base 50 and the resilient member 58 of the wheel mechanism 5' is ring-shaped, as shown in FIGs. 12 to 14. In this embodiment, the resilient member 58 may be sleeved on the rotating shaft 56 and abuts against the fixing base 50. The resilient member 58 may be interference fit with the rotating shaft 56 to prevent the resilient member 58 from coming off the rotating shaft 56 as the wheel base 52 is detached from the fixing base 50. The shape of the resilient member 58 may be oval-shaped, circular, rectangular or other shapes according to practical applications. In another embodiment, the resilient member 58 shown in FIG. 13 may also be replaced by the four resilient members 58 shown in FIG. 11 according to practical applications. As shown in FIG. 12, after the wheel mechanism 5' is assembled, the resilient member is disposed between the fixing base 50 and the wheel base 52 to prevent the wheel 54 with the wheel base 52 from moving up and down, so as to prevent the wheel 54 from shimmying. Furthermore, since the resilient member 58 is disposed between the fixing base 50 and the wheel base 52, it can further prevent the wheel base 52 and the fixing base 50 from colliding with each other to generate noise. The resilient member 58 may be interference fit with a contact surface of the wheel base 52 to ensure that the resilient member 58 is in tight contact with the wheel base 52.

As shown in FIG. 14, the resilient member 58 may have at least one protruding portion 580. In this embodiment, the resilient member 58 may have two protruding portions 580. It should be noted that the number and position of the protruding portions 580 may be determined according to practical applications, so the invention is not limited to the embodiment shown in the figure. After the wheel mechanism 5' is assembled, the protruding portions 580 abut against the wheel base 52. In other words, the resilient member 58 may be in contact with the wheel base 52 partially by the protruding portions 580. In another embodiment, the resilient member 58 may not have the protruding portions 580. At this time, the resilient member 58 is in surface contact with the wheel base 52. In another embodiment, the resilient member 58 may also be in contact with the fixing base 50 partially by the protruding portions 580.

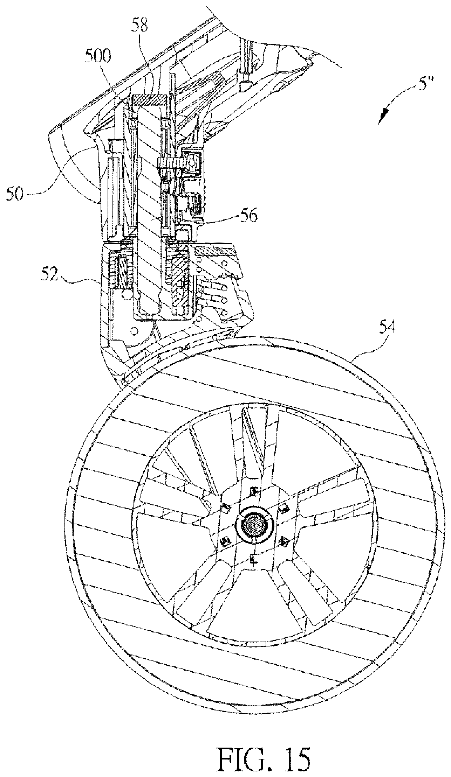

Referring to FIG. 15, FIG. 15 is a sectional view illustrating a wheel mechanism 5" according to another background example of the invention that is not covered by the claims. As shown in FIG. 15, the fixing base 50 has a through hole 500 and the rotating shaft 56 is disposed on the wheel base 52. The main difference between the wheel mechanism 5" and the aforesaid wheel mechanism 5 is that the resilient member 58 of the wheel mechanism 5" is disposed in the through hole 500 of the fixing base 50. Then, the rotating shaft 56 is rotatably disposed in the through hole 500 of the fixing base 50, such that the resilient member 58 is disposed between the fixing base 50 and the rotating shaft 56 to prevent the wheel 54 with the wheel base 52 from moving up and down, so as to prevent the wheel 54 from shimmying. Furthermore, since the resilient member 58 is disposed between the fixing base 50 and the rotating shaft 56, it can further prevent the rotating shaft 56 and the fixing base 50 from colliding with each other to generate noise. The resilient member 58 may be interference fit with a contact surface of the rotating shaft 56 to ensure that the resilient member 58 is in tight contact with the rotating shaft 56. In another embodiment, the resilient member 58 may also be embedded in an end of the rotating shaft 56.

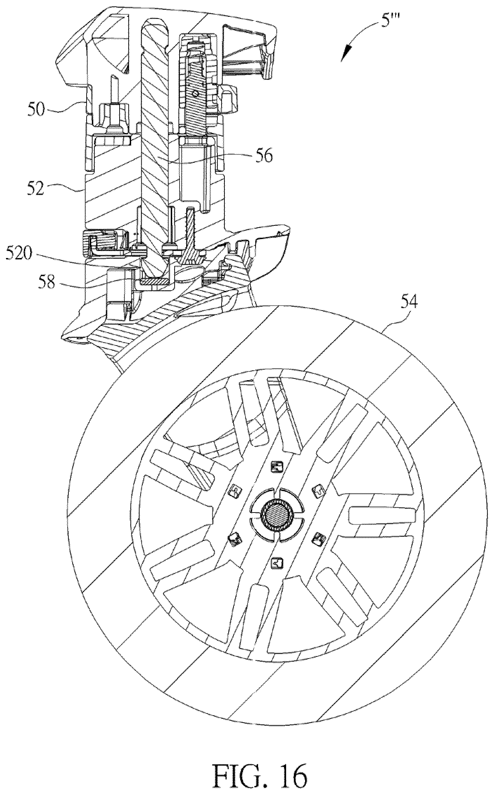

Referring to FIG. 16, FIG. 16 is a sectional view illustrating a wheel mechanism 5‴ according to another background example of the invention that is not covered by the claims. As shown in FIG. 16, the wheel base 52 has a through hole 520 and the rotating shaft 56 is disposed on the fixing base 50. The main difference between the wheel mechanism 5‴ and the aforesaid wheel mechanism 5 is that the resilient member 58 of the wheel mechanism 5‴ is disposed in the through hole 520 of the wheel base 52. Then, the rotating shaft 56 is rotatably disposed in the through hole 520 of the wheel base 52, such that the resilient member 58 is disposed between the wheel base 52 and the rotating shaft 56 to prevent the wheel 54 with the wheel base 52 from moving up and down, so as to prevent the wheel 54 from shimmying. Furthermore, since the resilient member 58 is disposed between the wheel base 52 and the rotating shaft 56, it can further prevent the rotating shaft 56 and the wheel base 52 from colliding with each other to generate noise. The resilient member 58 may be interference fit with a contact surface of the rotating shaft 56 to ensure that the resilient member 58 is in tight contact with the rotating shaft 56. In another embodiment, the resilient member 58 may also be embedded in an end of the rotating shaft 56.

As mentioned in the above, the invention disposes the gasket around the fixing tube to prevent the wheel with the wheel base from moving up and down, so as to prevent the wheel from shimmying. In an embodiment, the upper gasket may be disposed between the fixing base and the wheel base to prevent the fixing base and the wheel base from colliding with each other to generate noise. In another embodiment, the lower gasket may be disposed between the wheel base and the fixing tube to prevent the wheel base and the fixing tube from colliding with each other to generate noise. Needless to say, the invention may also dispose the upper gasket and the lower gasket around the fixing tube at the same time to improve the effect of preventing the wheel from shimmying. Furthermore, in another embodiment, when the wheel base is pivotally connected to the fixing base by the rotating shaft, the invention may selectively dispose a plurality of resilient members between at least two of the fixing base, the wheel base and the rotating shaft to prevent the wheel from shimmying.

The foregoing are only preferred embodiments of the invention while the protection scope thereof is not limited to the above description. The scope of protection of the invention is defined by the claims.

## Claims

1. A wheel mechanism (1, 1') comprising:
a fixing base (10);
a wheel base (12);
a wheel (14) pivotally connected to the wheel base (12);
a fixing tube (16) pivotally connecting the wheel base (12) to the fixing base (10); and
an upper gasket (18) disposed between the fixing base (10) and the wheel base (12),
**characterized in that** the upper gasket (18) has a ring shape and is sleeved on the fixing tube (16) and abuts against an inner surface (102) of the fixing base (10) and a top surface (122) of the wheel base (12).

2. The wheel mechanism (1') of claim 1 further **characterized in that** the wheel mechanism (1') further comprises a lower gasket (20) disposed between the wheel base (12) and the fixing tube (16);
wherein, optionally, the lower gasket (20) is disposed on a lower edge (160) of the fixing tube (16).

3. The wheel mechanism (1, 1') of any one of claims 1 or 2, further **characterized in that** the fixing base (10) has a fixing hole (100), the wheel base (12) has a through hole (120), and an end of the fixing tube (16) passes through the through hole (120) and is fixed in the fixing hole (100), such that the fixing tube (16) pivotally connects the wheel base (12) to the fixing base (10).

4. A wheel mechanism (1', 1", 3) comprising:
a fixing base (10, 30);
a wheel base (12, 32);
a wheel (14, 34) pivotally connected to the wheel base (12, 32);
a fixing tube (16, 36) pivotally connecting the wheel base (12, 32) to the fixing base (10, 30); and
a lower gasket (20, 40) disposed between the wheel base (12, 32) and the fixing tube (16, 36),
**characterized in that** the lower gasket (20, 40) has a ring shape and is sleeved on a lower edge (160) of the fixing tube (16, 36) and abuts against a bottom surface (124) of the wheel base (12) and the lower edge (160) of the fixing tube (16, 36).

5. The wheel mechanism (1') of claim 4, further **characterized in that** the wheel mechanism (1') further comprises an upper gasket (18) disposed between the fixing base (10) and the wheel base (12);
wherein, optionally, the upper gasket (18) is sleeved on the fixing tube (16).

6. The wheel mechanism (1', 1") of any one of claims 4 or 5, further **characterized in that** the fixing base (10) has a fixing hole (100), the wheel base (12) has a through hole (120), and an end of the fixing tube (16) passes through the through hole (120) and is fixed in the fixing hole (100), such that the fixing tube (16) pivotally connects the wheel base (12) to the fixing base (10).

7. The wheel mechanism (3) of any one of claims 4 to 6, further **characterized in that** the fixing tube (36) is fixed in the fixing base (30), the fixing tube (36) has a through hole (360), the wheel base (32) has a rotating shaft (320), and the rotating sha8ft (320) is rotatably disposed in the through hole (360), such that the fixing tube (36) pivotally connects the wheel base (32) to the fixing base (30);
wherein, optionally, a top of the rotating shaft (320) abuts against the fixing tube (36).

8. The wheel mechanism (3) of claim 7, further **characterized in that** the wheel base (32) has a directional plate (324) fixed on the rotating shaft (320) and the lower gasket (40) is disposed on the directional plate (324).

9. A wheel mechanism (5, 5', 5", 5‴) comprising:
a fixing base (50);
a wheel base (52);
a wheel (54) pivotally connected to the wheel base (52); and
a rotating shaft (56) disposed on one of the fixing base (50) and the wheel base (52), the wheel base (52) being pivotally connected to the fixing base (50) by the rotating shaft (56);
**characterized by** a plurality of resilient members (58) disposed on the wheel base (52) between the fixing base (50) and the wheel base (52) and around the rotating shaft (56).

10. The wheel mechanism (5') of claim9, further **characterized in that**:
the plurality of resilient members (58) has at least one protruding portion (580) and the at least one protruding portion (580) abuts against one of the fixing base (50) and the wheel base (52).

11. The wheel mechanism (5") of any one of claims 9 or 10, further **characterized in that** the fixing base (50) has a through hole (500), the plurality of resilient members (58) is disposed in the through hole (500), the rotating shaft (56) is disposed on the wheel base (52), and the rotating shaft (56) is rotatably disposed in the through hole (500), such that the plurality of resilient members (58) is disposed between the fixing base (50) and the rotating shaft (56).

12. The wheel mechanism (5‴) of any one of claims 9 to 11, further **characterized in that** the wheel base (52) has a through hole (520), the plurality of resilient members (58) is disposed in the through hole (520), the rotating shaft (56) is disposed on the fixing base (50), and the rotating shaft (56) is rotatably disposed in the through hole (520), such that the plurality of resilient members (58) is disposed between the wheel base (52) and the rotating shaft (56).

## Patentansprüche

1. Radmechanismus (1, 1'), umfassend:
eine Befestigungsbasis (10);
eine Radbasis (12);
ein Rad (14), das schwenkbar mit der Radbasis (12) verbunden ist;
ein Befestigungsrohr (16), das die Radbasis (12) schwenkbar mit der Befestigungsbasis (10) verbindet; und
eine obere Dichtung (18), die zwischen der Befestigungsbasis (10) und der Radbasis (12) angeordnet ist,
**dadurch gekennzeichnet, dass** die obere Dichtung (18) eine Ringform aufweist und auf das Befestigungsrohr (16) aufgeschoben ist und an einer Innenfläche (102) der Befestigungsbasis (10) und einer oberen Fläche (122) der Radbasis (12) anliegt.

2. Radmechanismus (1') nach Anspruch 1, ferner **dadurch gekennzeichnet, dass** der Radmechanismus (1') ferner eine untere Dichtung (20) umfasst, die zwischen der Radbasis (12) und dem Befestigungsrohr (16) angeordnet ist;
wobei optional die untere Dichtung (20) an einer unteren Kante (160) des Befestigungsrohrs (16) angeordnet ist.

3. Radmechanismus (1, 1') nach einem der Ansprüche 1 oder 2, ferner **dadurch gekennzeichnet, dass** die Befestigungsbasis (10) ein Befestigungsloch (100) aufweist, die Radbasis (12) ein Durchgangsloch (120) aufweist und ein Ende des Befestigungsrohrs (16) durch das Durchgangsloch (120) verläuft und in dem Befestigungsloch (100) befestigt ist, so dass das Befestigungsrohr (16) die Radbasis (12) schwenkbar mit der Befestigungsbasis (10) verbindet.

4. Radmechanismus (1', 1", 3), umfassend:
eine Befestigungsbasis (10, 30);
eine Radbasis (12, 32);
ein Rad (14, 34), das schwenkbar mit der Radbasis (12, 32) verbunden ist;
ein Befestigungsrohr (16, 36), das die Radbasis (12, 32) schwenkbar mit der Befestigungsbasis (10, 30) verbindet; und
eine untere Dichtung (20, 40), die zwischen der Radbasis (12, 32) und dem Befestigungsrohr (16, 36) angeordnet ist,
**dadurch gekennzeichnet, dass** die untere Dichtung (20, 40) eine Ringform aufweist und auf eine untere Kante (160) des Befestigungsrohrs (16, 36) aufgeschoben ist und an einer unteren Fläche (124) der Radbasis (12) und der unteren Kante (160) des Befestigungsrohrs (16, 36) anliegt.

5. Radmechanismus (1') nach Anspruch 4, ferner **dadurch gekennzeichnet, dass** der Radmechanismus (1') ferner eine obere Dichtung (18) umfasst, die zwischen der Befestigungsbasis (10) und der Radbasis (12) angeordnet ist;
wobei optional die obere Dichtung (18) auf das Befestigungsrohr (16) aufgeschoben ist.

6. Radmechanismus (1', 1") nach einem der Ansprüche 4 oder 5, ferner **dadurch gekennzeichnet, dass** die Befestigungsbasis (10) ein Befestigungsloch (100) aufweist, die Radbasis (12) ein Durchgangsloch (120) aufweist und ein Ende des Befestigungsrohrs (16) durch das Durchgangsloch (120) verläuft und in dem Befestigungsloch (100) befestigt ist, so dass das Befestigungsrohr (16) die Radbasis (12) schwenkbar mit der Befestigungsbasis (10) verbindet.

7. Radmechanismus (3) nach einem der Ansprüche 4 bis 6, ferner **dadurch gekennzeichnet, dass** das Befestigungsrohr (36) in der Befestigungsbasis (30) befestigt ist, das Befestigungsrohr (36) ein Durchgangsloch (360) aufweist, die Radbasis (32) eine Drehwelle (320) aufweist und die Drehwelle (320) drehbar in dem Durchgangsloch (360) angeordnet ist, so dass das Befestigungsrohr (36) die Radbasis (32) schwenkbar mit der Befestigungsbasis (30) verbindet;
wobei optional eine Oberseite der Drehwelle (320) an dem Befestigungsrohr (36) anliegt.

8. Radmechanismus (3) nach Anspruch 7, ferner **dadurch gekennzeichnet, dass** die Radbasis (32) eine Richtungsplatte (324) aufweist, die an der Drehwelle (320) befestigt ist, und die untere Dichtung (40) an der Richtungsplatte (324) angeordnet ist.

9. Radmechanismus (5, 5', 5", 5‴), umfassend:
eine Befestigungsbasis (50);
eine Radbasis (52);
ein Rad (54), das schwenkbar mit der Radbasis (52) verbunden ist; und
eine Drehwelle (56), die an einer von der Befestigungsbasis (50) und der Radbasis (52) angeordnet ist, wobei die Radbasis (52) durch die Drehwelle (56) schwenkbar mit der Befestigungsbasis (50) verbunden ist;
**gekennzeichnet durch** eine Vielzahl von elastischen Elementen (58), die an der Radbasis (52) zwischen der Befestigungsbasis (50) und der Radbasis (52) und um die Drehwelle (56) herum angeordnet sind.

10. Radmechanismus (5') nach Anspruch 9, ferner **dadurch gekennzeichnet, dass**:
die Vielzahl von elastischen Elementen (58) mindestens einen vorstehenden Abschnitt (580) aufweist und der mindestens eine vorstehende Abschnitt (580) an einer von der Befestigungsbasis (50) und der Radbasis (52) anliegt.

11. Radmechanismus (5") nach einem der Ansprüche 9 oder 10, ferner **dadurch gekennzeichnet, dass** die Befestigungsbasis (50) ein Durchgangsloch (500) aufweist, die Vielzahl von elastischen Elementen (58) in dem Durchgangsloch (500) angeordnet ist, die Drehwelle (56) an der Radbasis (52) angeordnet ist und die Drehwelle (56) drehbar in dem Durchgangsloch (500) angeordnet ist, so dass die Vielzahl von elastischen Elementen (58) zwischen der Befestigungsbasis (50) und der Drehwelle (56) angeordnet ist.

12. Radmechanismus (5") nach einem der Ansprüche 9 bis 11, ferner **dadurch gekennzeichnet, dass** die Radbasis (52) ein Durchgangsloch (520) aufweist, die Vielzahl von elastischen Elementen (58) in dem Durchgangsloch (520) angeordnet ist, die Drehwelle (56) an der Befestigungsbasis (50) angeordnet ist und die Drehwelle (56) drehbar in dem Durchgangsloch (520) angeordnet ist, so dass die Vielzahl von elastischen Elementen (58) zwischen der Radbasis (52) und der Drehwelle (56) angeordnet ist.

## Revendications

1. Un mécanisme de roue (1, 1')
comprenant :
une base de fixation (10) ;
une base de roue (12) ;
une roue (14) reliée de manière pivotante à la base de roue (12) ;
un tube de fixation (16) reliant de manière pivotante la base de roue (12) à la base de fixation (10) ; et
un joint supérieur (18) disposé entre la base de fixation (10) et la base de roue (12),
**caractérisé en ce que** le joint supérieur (18) a une forme annulaire et est monté autour du tube de fixation (16) et est en appui contre une surface interne (102) de la base de fixation (10) et une surface supérieure (122) de la base de roue (12).

2. Le mécanisme de roue (1') selon la revendication 1, en outre **caractérisé en ce que** le mécanisme de roue (1') comprend en outre un joint inférieur (20) disposé entre la base de roue (12) et le tube de fixation (16) ; lequel, éventuellement, le joint inférieur (20) est disposé sur un bord inférieur (160) du tube de fixation (16).

3. Le mécanisme de roue (1, 1') selon l'une quelconque des revendications 1 ou 2, en outre **caractérisé en ce que** la base de fixation (10) a un trou de fixation (100), la base de roue (12) a un trou traversant (120), et une extrémité du tube de fixation (16) passe à travers le trou traversant (120) et est fixée dans le trou de fixation (100), de sorte que le tube de fixation (16) relie de manière pivotante la base de roue (12) à la base de fixation (10).

4. Un mécanisme de roue (1', 1", 3)
comprenant :
une base de fixation (10, 30) ;
une base de roue (12, 32) ;
une roue (14, 34) reliée de manière pivotante à la base de roue (12, 32) ;
un tube de fixation (16, 36) reliant de manière pivotante la base de roue (12, 32) à la base de fixation (10, 30) ; et
un joint inférieur (20, 40) disposé entre la base de roue (12, 32) et le tube de fixation (16, 36),
**caractérisé en ce que** le joint inférieur (20, 40) a une forme annulaire et est monté autour d'un bord inférieur (160) du tube de fixation (16, 36) et est en appui contre une surface inférieure (124) de la base de roue (12) et le bord inférieur (160) du tube de fixation (16, 36).

5. Le mécanisme de roue (1') selon la revendication 4, en outre **caractérisé en ce que** le mécanisme de roue (1') comprend en outre un joint supérieur (18) disposé entre la base de fixation (10) et la base de roue (12) ; lequel, éventuellement, le joint supérieur (18) est monté autour du tube de fixation (16).

6. Le mécanisme de roue (1', 1") selon l'une quelconque des revendications 4 ou 5, en outre **caractérisé en ce que** la base de fixation (10) a un trou de fixation (100), la base de roue (12) a un trou traversant (120), et une extrémité du tube de fixation (16) passe à travers le trou traversant (120) et est fixée dans le trou de fixation (100), de sorte que le tube de fixation (16) relie de manière pivotante la base de roue (12) à la base de fixation (10).

7. Le mécanisme de roue (3) selon l'une quelconque des revendications 4 à 6, en outre **caractérisé en ce que** le tube de fixation (36) est fixé dans la base de fixation (30), le tube de fixation (36) a un trou traversant (360), la base de roue (32) a un arbre de rotation (320), et l'arbre de rotation (320) est disposé de manière rotative dans le trou traversant (360), de sorte que le tube de fixation (36) relie de manière pivotante la base de roue (32) à la base de fixation (30) ;
lequel, éventuellement, une extrémité supérieure de l'arbre de rotation (320) est en appui contre le tube de fixation (36).

8. Le mécanisme de roue (3) selon la revendication 7, en outre **caractérisé en ce que** la base de roue (32) a une plaque directionnelle (324) fixée sur l'arbre de rotation (320) et le joint inférieur (40) est disposé sur la plaque directionnelle (324).

9. Un mécanisme de roue (5, 5', 5", 5")
comprenant : une base de fixation (50) ;
une base de roue (52) ;
une roue (54) reliée de manière pivotante à la base de roue (52) ; et
un arbre de rotation (56) disposé sur l'une de la base de fixation (50) et de la base de roue (52), la base de roue (52) étant reliée de manière pivotante à la base de fixation (50) par l'arbre de rotation (56) ;
**caractérisé par** une pluralité d'éléments élastiques (58) disposés sur la base de roue (52) entre la base de fixation (50) et la base de roue (52) et autour de l'arbre de rotation (56).

10. Le mécanisme de roue (5') selon la revendication 9, en outre **caractérisé en ce que** : la pluralité d'éléments élastiques (58) a au moins une partie saillante (580) et ladite au moins une partie saillante (580) est en appui contre l'une de la base de fixation (50) et de la base de roue (52).

11. Le mécanisme de roue (5") selon l'une quelconque des revendications 9 ou 10, en outre **caractérisé en ce que** la base de fixation (50) a un trou traversant (500), la pluralité d'éléments élastiques (58) est disposée dans le trou traversant (500), l'arbre de rotation (56) est disposé sur la base de roue (52), et l'arbre de rotation (56) est disposé de manière rotative dans le trou traversant (500), de sorte que la pluralité d'éléments élastiques (58) est disposée entre la base de fixation (50) et l'arbre de rotation (56).

12. Le mécanisme de roue (5") selon l'une quelconque des revendications 9 à 11, en outre **caractérisé en ce que** la base de roue (52) a un trou traversant (520), la pluralité d'éléments élastiques (58) est disposée dans le trou traversant (520), l'arbre de rotation (56) est disposé sur la base de fixation (50), et l'arbre de rotation (56) est disposé de manière rotative dans le trou traversant (520), de sorte que la pluralité d'éléments élastiques (58) est disposée entre la base de roue (52) et l'arbre de rotation (56).
